# EUROPEAN PATENT SPECIFICATION

(11) **EP 3 352 305 B1**
(45) Date of publication and mention of the grant of the patent: **03.06.2020**
(21) Application number: 18152774.8
(22) Date of filing: 22.01.2018
(51) Int. Cl.: H01R 12/58, H01M 2/20, G01R 31/36, H01M 10/42, H01R 13/405, H01R 13/52, H01R 13/66, H01R 43/20, H01R 4/242

(54) **CONNECTION ASSEMBLY**
VERBINDUNGSANORDNUNG
ENSEMBLE DE CONNEXION

(30) Priority: 22.01.2017 CN 201710053453
(43) Date of publication of application: 25.07.2018
(73) Proprietor: Tyco Electronics (Shanghai) Co. Ltd., Shanghai (CN)
(72) Inventor: Li, Ziwei, Shanghai, 200233 (CN); Zhou, Xiao, Shanghai, 200233 (CN); Zhao, Cancan, Shanghai, 200233 (CN)
(74) Representative: Grünecker Patent- und Rechtsanwälte PartG mbB

(56) References cited:
- WO-A2-2008/005945
- CN-U- 205 335 452
- CN-U- 205 861 226
- CN-U- 205 863 576

## Description

### TECHNICAL FIELD

The present disclosure generally relates to a connection structure for a battery, and more particularly to a connection assembly.

### BACKGROUND

As the demands on environmental protection are growing increasingly higher, energy-efficiency and environment-friendliness are also major concerns in energy use. Most fossil fuels will produce more air pollutions upon combustion, but batteries will not. Therefore, as an alternative energy, batteries win more and more favor. In particular, currently automobile exhausts have become one of the major sources of air pollution. This is why electric vehicles without exhaust emissions are much favored. However, due to various reasons such as insufficient power, limited range, and high cost, etc., the electric vehicles are hard to be accepted by most common users and then to be promoted. A significant reason for the promotion difficulty of current electric vehicles is that the battery, as a core component of an electric vehicle, is high cost but technologically inadequate. Therefore, the issues regarding how to improve the stability of power output of a battery pack and how to facilitate assembly thereof to save manufacturing costs have to be considered.

Connection assemblies of the art are for instance shown in CN 205335452 U, CN 205863576 U and in CN 205861226 U. The connection assemblies shown in the art comprise a bracket, a circuit board disposed on the bracket, a connector disposed on the bracket and a terminal which is configured to be electrically connected with the connector and the circuit board.

### SUMMARY OF THE INVENTION

One of the objectives of the present disclosure is to provide a connection assembly that is stable in connection and easy to assemble and disassemble so as to overcome the drawbacks in the prior art.

According to one aspect of the present disclosure, a connection assembly is provided. The connection assembly comprises a bracket, a circuit board, a connector, and a press-fit terminal. The circuit board is disposed on the bracket and provided with a press-fit through-hole. The connector is disposed on the bracket and configured for electrically connecting a battery cell. The press-fit terminal has a connection end and a press-fit end. The connection end is electrically connected with the connector. The press-fit end extends into at least part of the press-fit through-hole and is electrically connected with the circuit board, wherein the connection assembly further comprises a detection element and an insulation displacement connection terminal. The detection element is disposed on the connector for monitoring parameters of the battery cell. The detection element is electrically connected with the circuit board to transmit a detection signal, as detected, to the circuit board. The insulation displacement connection terminal is electrically connected with the detection element and the circuit board, respectively.

Preferably, the connection assembly further comprises a filler that extends into the press-fit through-hole and contacts with the press-fit end, thereby securing the press-fit terminal onto the circuit board. More preferably, the filler is a cured sealant.

Preferably, the press-fit terminal is configured to be press-fitted and electrically connected with the circuit board.

Preferably, the press-fit terminal comprises a connection body and a press-fit end portion. The connection body is electrically connected with the connector. The press-fit end portion is protrudingly disposed on the connection body; the press-fit end portion is inserted in the press-fit through-hole and is electrically connected with the circuit board.

Preferably, the connector comprises a connection body and a connection end portion, the connection end portion being protrudingly disposed on the connection body and being electrically connected with the press-fit terminal.

Preferably, the connector has a first metal material structure. The press-fit terminal has a second metal material structure different from that of the connector.

In a preferred embodiment, the connection assembly further comprises a mounting rack. The mounting rack is disposed on the connector and provided with a mounting hole. The detection element is disposed in the mounting hole. In another preferred embodiment, the detection element comprises a temperature sensor configured for detecting a temperature of the connector. More preferably, the temperature sensor is a thermistor. In yet another preferred embodiment, the detection element comprises a voltage detection element configured for detecting a voltage of the connector. In still another preferred embodiment, the detection element has a connection pin that is electrically connected with the circuit board. More preferably, the insulation displacement connection terminal comprises a terminal body and a plug-in end; the plug-in end is protrudingly disposed on one end of the terminal body and continuously extends to be plugged into the press-fit through-hole so as to be electrically connected with the circuit board. Additionally or alternatively, the insulation displacement connection terminal is configured to be press-fitted and electrically connected with the circuit board. Additionally or alternatively, the connection assembly further comprises a filler, the filler extending into the press-fit through-hole to contact the plug-in end, thereby securing the insulation displacement connection terminal onto the circuit board. More preferably, the filler is disposed to surround the plug-in end. Additionally or alternatively, the filler continuously extends to cover at least part of the circuit board. In some preferred embodiments, the detection element has a connection pin. The connection pin is electrically connected with the circuit board. The insulation displacement connection terminal further comprises a pair of knife-clamping pieces, the pair of knife-clamping pieces being arranged to directly face each other with a spacing that is less than a radial size of the connection pin; and the connection pin extends into the spacing between the pair of knife-clamping pieces and is arranged to abut against the pair of knife-clamping pieces. More preferably, a holding cavity is provided on the bracket. The pair of knife-clamping pieces is inserted in the holding cavity. The connection pin extends into the holding cavity.

Compared with the prior art, the connection assembly of the present disclosure is stable in connection and may conveniently transmit voltage, current, and other various electrical signals. The connection assembly is convenient to assemble and saves manufacturing costs. A battery module adopting the connection assembly may have a higher price-performance ratio. Preferably, the connection assembly adopts a press-fit terminal, which may conveniently and quickly implement an electrical connection between the connector and the circuit board. An insulation displacement connection is provided between the detection element and the circuit board, which enhances stable connection performance and improves assembly efficiency. In particular, provision of the filler can not only boost limiting and holding of the press-fit terminal and the insulation displacement terminal to enhance their secure electrical connection with the circuit board, but also enhance the integrity performance, sealing and insulation performance of the connection assembly.

### BRIEF DESCRIPTION OF THE DRAWINGS

Fig. 1 is a structural schematic diagram of a connection assembly provided according to the present disclosure.
Fig. 2 is a schematic diagram of the connection assembly in Fig.1 projected from a top portion to a bottom portion of the circuit board.
Fig. 3 is a structural schematic diagram of the circuit board in Fig. 1.
Fig. 4 is a structural schematic diagram of the connection assembly of Fig. 3 where a filler is disposed to cover the circuit board.
Fig. 5 is a structural schematic diagram of an example of a connector in Fig. 1.
Fig. 6 is a structural schematic diagram of an embodiment of the connector of Fig. 1 where a detection element is provided.
Fig. 7 is a structural schematic diagram of the connector provided with a detection element in Fig. 6 from another visual angle.
Fig. 8 is a structural schematic diagram of another embodiment of the connector provided with a detection element in Fig. 6.
Fig. 9 is a structural schematic diagram of an insulation displacement connection terminal shown in Fig. 6.
Fig. 10 is a sectional view of the connection assembly of Fig. 2 along an A-A line.
Fig. 11 is an enlarged schematic view of the connection assembly of Fig. 10 at E.
Fig. 12 is a sectional view of the connection assembly of Fig. 2 along a B-B line.
Fig. 13 is an enlarged schematic view of the connection assembly of Fig. 12 at F.

### DETAILED DESCRIPTION OF EMBODIMENTS

Hereinafter, the present disclosure will be described in detail with reference to the companying drawings:

### Embodiment 1:

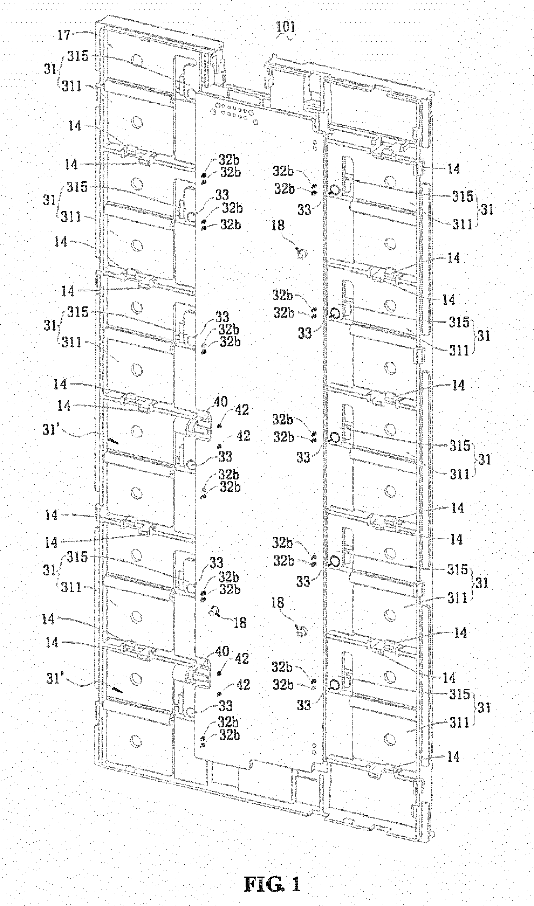

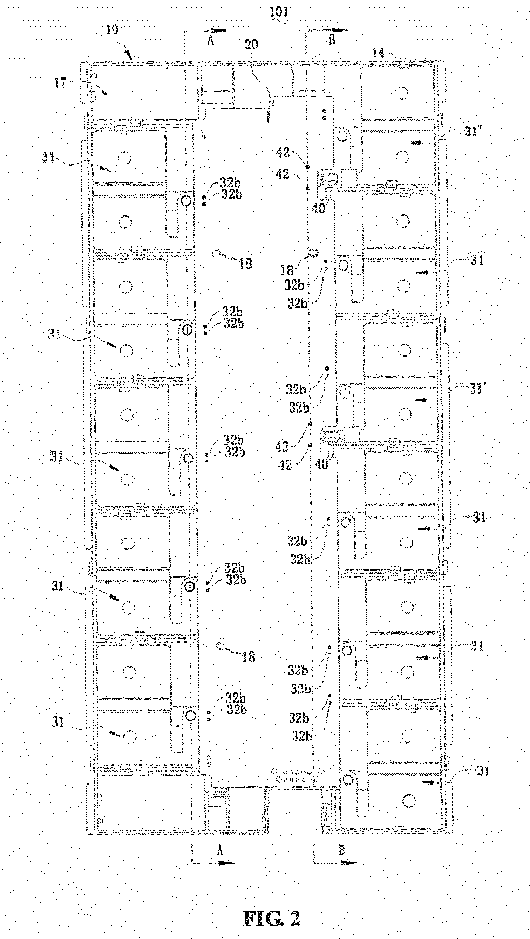

With reference to Fig. 1 and Fig. 2, a connection assembly 101 is provided according to the present disclosure. The connection assembly 101 comprises a bracket 10, a circuit board 20, and a connector 31. The circuit board 20 is disposed on the bracket 10. The connector 31 is disposed on the bracket 10 and is configured to be electrically connected with the circuit board 20.

The bracket 10 is a support structure, which may be applied to a battery pack. The bracket 10 may be a lead-frame. In this embodiment, the bracket 10 is substantially plate-shaped. To facilitate securely holding the connector 31, the bracket 10 is provided with a mounting groove. In this embodiment, the mounting groove is substantially a rectangular groove. The mounting groove is a through-groove. In other words, the mounting groove has a bottom through-hole. A bottom portion of the mounting groove is provided with a stepped portion. The stepped portion is disposed surrounding the bottom through-hole to support the connector 31. The bottom through-hole enables a battery cell (not shown in the figure) to extend from a bottom portion of the bracket 10 to be electrically connected with the connector 31, thereby sufficiently utilizing spaces at two sides of the top portion and the bottom portion of the bracket 10. The number and arrangement of the mounting grooves may be selected according to connection needs. In this embodiment, the mounting grooves 12 are arranged in two rows with each row comprising a plurality of mounting grooves.

To further securely hold the connector 31, the bracket 10 is provided with a snap joint 14. The snap joint 14 may be configured to be snap-fitted with the connector 31. The specific number and specification of the snap joint 14 may be selected according to actual needs. In this embodiment, every two snap joints 14 are snap-fitted with one corresponding connector 31, the two snap joints 14 being disposed at two sides of the corresponding mounting groove.

To securely hold the insulation displacement connection terminal 37 described infra, the bracket 10 is provided with a holding cavity 16. In this embodiment, the holding cavity 16 is substantially a rectangular groove-shaped. The holding cavity 16 is disposed at a top portion of the bracket 10. It may be understood that the "top portion" of the bracket 10 is opposite to the "bottom portion" thereof. The "top portion" of the bracket 10 is provided with the circuit board 20.

To facilitate positioning and holding the circuit board 20, a mounting stud 18 is disposed to protrude from the top portion of the bracket 10. The mounting stud 18 may be inserted in the mounting hole 26 of the circuit board 20. In this embodiment, the mounting stud 18 comprises a supporting part and a limiting part. The supporting part has an aperture larger than that of the mounting hole 26 to support the bottom portion of the circuit board 20. The limiting part is protrudingly disposed on the supporting part and extends into the mounting hole 26 to thereby enable the circuit board 20 to be positioned and mounted. The limiting part may be a circular column.

To facilitate manufacturing and insulation, the bracket 10 is an injection molded part. More specifically, the bracket 10 is an insert injection molded part to wrap and seal part of the connector 31. The bracket 10 forms a sealing part 19. The sealing part 19 is arranged for wrapping and sealing the connector 31.

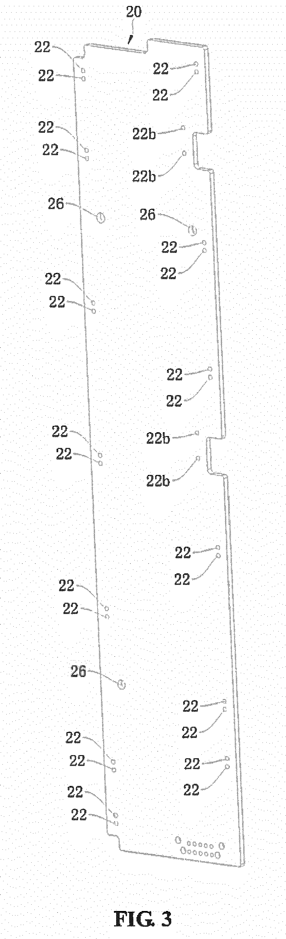

With reference to Fig. 3 as well, the circuit board 20 (also abbreviated as PCB (Printed Circuit Board) is shown. Specific shapes of the circuit board 20 may be selected according to application needs. In this embodiment, the circuit board 20 is substantially strip plate-shaped. To facilitate enabling an electrical connection with a press-fit terminal 32 described infra of the connector 31, the circuit board 20 is provided with a press-fit through-hole 22. The number and distribution of the press-fit through-holes 22 are only required to satisfy a corresponding connection requirement. Some of the press-fit through-holes 22b are electrically connected with an insulation displacement connection terminal 37 as will be described infra. To be distinguishable, the press-fit through-hole 22b mated with the insulation displacement connection terminal 37 may also be the press-fit through-hole 22. The specification and number of the press-fit through-holes 22b may be selected according to the requirement for connecting and mating with the corresponding insulation displacement connection terminal 37. To mount-fit with the mounting stud 18, a mounting hole 26 is provided on the circuit board 20. The mounting holes 26 are one-to-one plug-in fitted with the mounting studs 18.

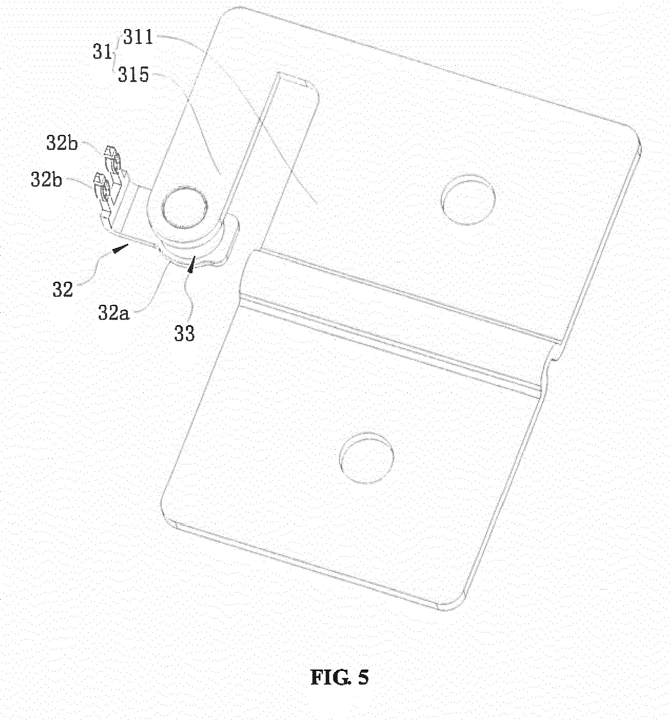

With reference to Figs. 5-7, the connector 31 is disposed on the bracket 10 and is configured to be connected with a battery cell to transmit corresponding current, voltage and electric signals to the circuit board 20. The connector 31 may be just a structure for transmitting current. In this embodiment, to stably transmit a relatively large current outputted by the battery cell to the circuit board 20, the connector 31 may be a busbar. The connector 31 is disposed on the bracket 10 and is electrically connected with the circuit board 20 and is configured to be electrically connected to the battery cell to conduct current to the circuit board 20. The connector 31 adopts a first metal material structure; i.e., the connector 31 is made of a first metal. In this embodiment, the connector 31 is an aluminum integral element, i.e., an integral element of an aluminum structure. In this embodiment, the connector 31 comprises a connection body 311 and a connection end portion 315. The connection body 311 is received within the mounting groove. The connection body 311 is snap-fitted with the snap joint 14, i.e., stop-fitted along a vertical direction from the bottom portion to the top portion of the bracket 10. The connection body 311 is substantially rectangular plate-shaped, and an elongated groove (not shown) is provided along a middle portion of the rectangular plate. The connection body 311 extends along a length direction of the bracket 10. To facilitate welding to the battery cell, two welding through-holes (not shown) are provided in the connection body 311.

The connection end portion 315 is protrudingly disposed on the connection body 311. The connection end portion 315 is substantially L-shaped. To enhance an elasticity performance of the connection end portion 315 to adapt a vibrational environment, the connection end portion 315 has at least one notches. In this embodiment, two sides of the connection end portion 315 are provided with one notch, respectively, and the two notches are arranged apart along an extending direction of the connection end portion 315. The notch may be a U-shaped notch. The connection end portion 315 is connected with a switching connection stud 33 as will be described infra. A welding through-hole is provided on the connection end portion 315. The welding through-hole is configured for accommodating a top end of the switching connection stud 33 and is welded to connect with the switching connection stud 33.

Continuously with reference to Figs. 5 to 7, to conveniently and quickly enable an electrical connection between the connector 31 and the circuit board 20, the connection assembly 101 comprises a press-fit terminal 32. The press-fit terminal 32 comprises a connection end 32a and a press-fit end 32b. The connection end 32a of the press-fit terminal 32 is electrically connected with the connector 31, and the press-fit end 32b is press-fitted with the circuit board 20 to establish a contact electrical connection therebetween. In this embodiment, the press-fit terminal 32 is substantially L-shaped. The press-fit end 32b of the press-fit terminal 32 extends into a press-fit through-hole 22 of the circuit board 20 and protrudes from the press-fit through-hole 22. In this embodiment, the press-fit end 32b of the press-fit terminal 32 is arranged to abut against the press-fit through-hole 22. When being assembled, the press-fit through-hole 22 of the circuit board 20 may be press-fitted with the press-fit end 32b of the press-fit terminal 32. Upon completion of the press-fit, the press-fit terminal 32 may directly contact the circuit board 20 to establish an electrical connection therewith. Further, the press-fit end 32b of the press-fit terminal 32 may be in welding (e.g., wave-soldering) connection with a welding face (i.e., a top face in the figure) of the circuit board 20. The press-fit terminal 32 is a second metal material structure, e.g., second metal made. The second metal material is a different metal material from the first metal material. Specifically, the press-fit terminal 32 is a copper structure to maintain the same copper material as that of the circuit board 20 so as to facilitate a secure welding connection. In this embodiment, the press-fit terminal 32 has a connection body (not shown). Two ends of the connection body are connected with the press-fit end 32b and the connection end 32a, respectively. To facilitate space utilization, the connection body is L-shaped. As shown in Figs. 1 to 3, the press-fit terminal 32 is press-fitted with some of the press-fit through-holes 22 to thereby implement an electrical connection with the circuit board 20. Further, some of the press-fit through-holes 22b are press-fitted and electrically connected with the insulation displacement connection terminal 37 as will be described infra.

To enable the press-fit terminal 32 to securely and long-livedly connect with the connector 31, the connection assembly 101 further comprises a switching connection stud 33. The switching connection stud 33 is arranged for switching between different metal materials. In this embodiment, the switching connection stud 33 adopts a first metal material identical to that of the connector 31. In this embodiment, the switching connection stud 33 is an aluminum structure. The switching connection stud 33 is substantially circular column-shaped. The switching connection stud 33 is electrically connected with the connector 31. Specifically, a top end of the switching connection stud 33 is electrically connected with the connection end portion 315. In this embodiment, the top end of the switching connection stud 33 is laser welded to the connection end portion 315 of the connector 31. A bottom end of the switching connection stud 33 is electrically connected with the connection end 32a of the press-fit terminal 32. In this embodiment, to enhance secure connection performance, a bottom end of the switching connection stud 33 is successively riveted and welded to connect with the connection end 32a of the press-fit terminal 32; i.e., the forgoing two parts are first riveted and then welded. To enhance the sealing and anti-corrosion performance, the connection portion between the bottom end of the switching connection stud 33 and the connection end 32a of the press-fit terminal 32 is hermetically disposed in the bracket 10. In this embodiment, the sealing part 19 of the bracket 10 wraps and seals the connection portion between the bottom end of the switching connection stud 33 and the connection end 32a of the press-fit terminal 32. Specifically, during the process of injection-molding to form the bracket 10, the bottom end of the switching connection stud 33 and the connection end 32a of the press-fit terminal 32, as inlays or inserts, are pre-set inside a mold, and then are injection-molded into the sealing part 19 wrapping and covering the connection portion.

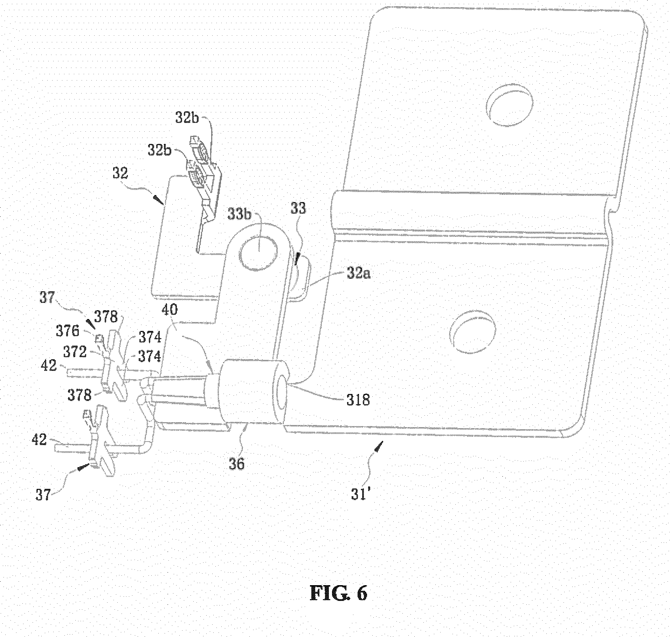

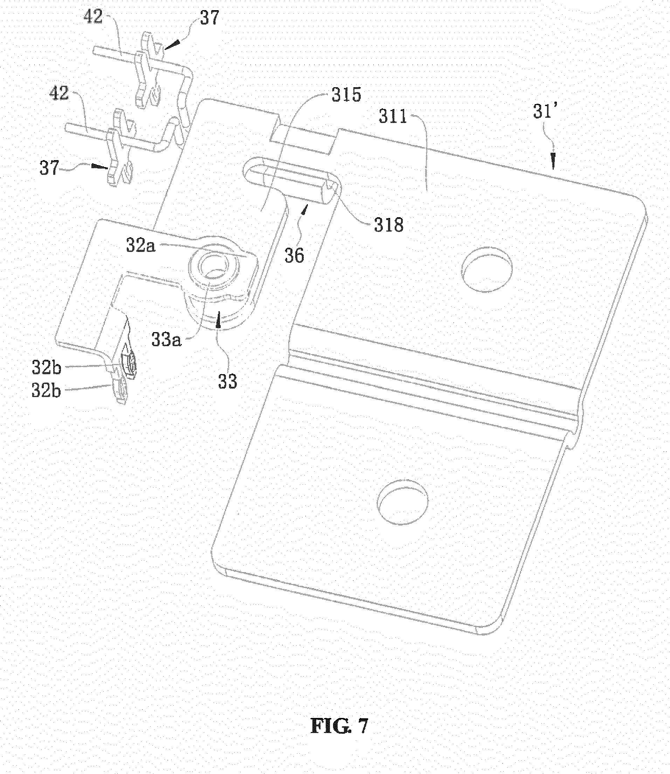

Continuously referring to Fig. 6 and Fig. 7, as a variation of the connector 31, the present disclosure provides a further connector 31'. Different from the foregoing connector 31, the connector 31' is provided with a mounting rack 36. The mounting rack 36 has a mounting hole 318. The mounting rack 36 and the connector 31' may be two separately and individually formed components. In this embodiment, the mounting rack 36 and the connector 31 are integrally molded to form the connector 31'. The mounting rack 36 is bent into the mounting hole 318 by stamping. The mounting hole 318 may facilitate securely supporting and holding a detection element 40 as described infra. The mounting hole 318 may accommodate the following detection element 40. The mounting hole 318 may be a blind hole. In this embodiment, the mounting hole 318 is a through-hole. The mounting hole 318 is disposed on the connection end portion 315. The mounting hole 318 is formed by stamping and bending a plate-shaped structure.

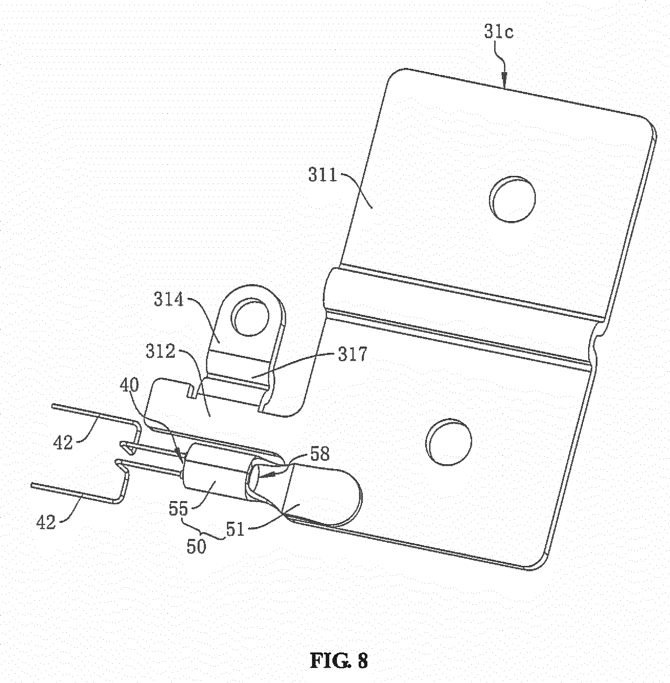

Referring to Fig. 8, as a variation of the mounting rack 36 described above, the present disclosure further provides another kind of mounting rack 50. The mounting rack 50 is disposed on the connector 31c. The mounting rack 50 contacts with the connector 31c. The mounting rack 50 comprises a setting part 51 and a supporting part 55. The setting part 51 is disposed on the connector 31c. In this embodiment, the setting part 51 is substantially plate-shaped extending along a width direction of the circuit board 20. To enhance secure connection performance, the setting part 51 is connected with the connection body 311 by welding. The supporting part 55 is only required to be capable of supporting and holding the detection element 40. In this embodiment, the supporting part 55 has a mounting hole 58. Correspondingly, the supporting part 55 is substantially tubular shaped extending along a width direction of the circuit board 20. The mounting hole 58 is configured to accommodate the detection element 40. The mounting hole 58 is arranged to extend along a width direction of the circuit board 20. To sufficiently utilize the space and avoid mutual interference, the supporting part 55 is disposed to protrude from the connector 31. The mounting rack 50 may be a conductor. In this embodiment, the mounting rack 50 is a copper-made integral element. The mounting rack 50 and the connector 31 are separate components, respectively.

At this point, as a variation of the connector 31, there is provided another connector 31c that may be fitted with the mounting rack 50. The connector 31c further comprises a first support arm 312 and a second support arm 314 disposed on the connection body 311. The first support arm 312 is arranged to be perpendicular to the second support arm 314. The first support arm 312 is provided to laterally extend along the circuit board 20. In this embodiment, the first support arm 312 extends along a width direction of the circuit board 20. The second support arm 314 is disposed to extend along a longitudinal direction of the circuit board 20. To enhance anti-vibration performance of the second support arm 314 and counteract a connection stress, a bent part 317 is disposed on the second support arm 314. The bent part 317 is an arched or recessed shape.

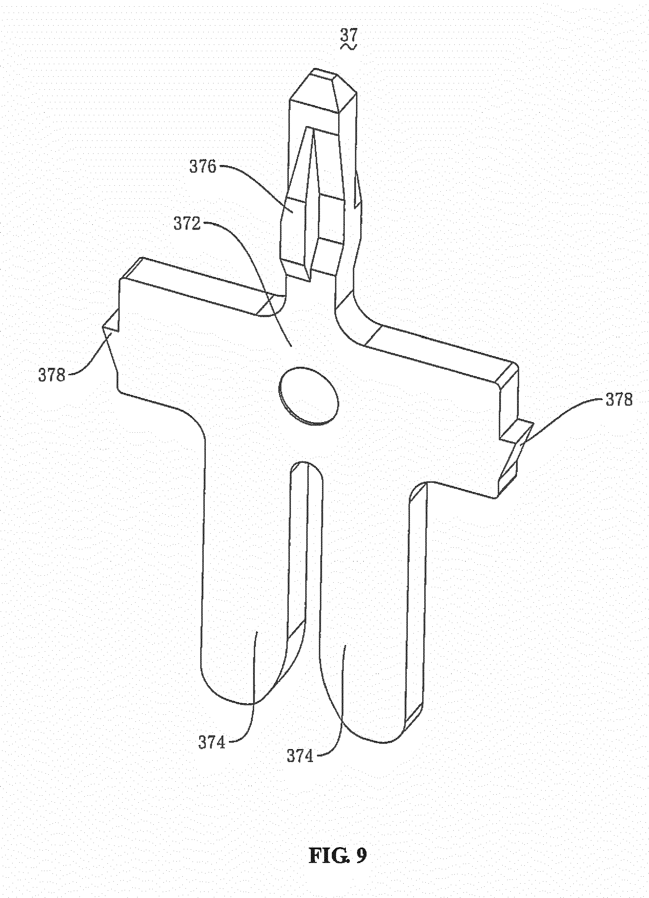

Referring to Fig. 9, to facilitate a secure and convenient contact and electrical connection with other electronic elements, the connection assembly 101 further comprises an insulation displacement connection terminal 37. The insulation displacement connection terminal 37 is configured to be connected to the circuit board 20 and detection element 40 as described infra, respectively. It may be understood that the term the insulation displacement connections is abbreviated as IDC. The number and distribution of the insulation displacement connection terminal may be selected according to corresponding connection needs. In this embodiment, each of the insulation displacement connection terminal 37 is electrically connected with a connection pin of one of the detection elements 40. The insulation displacement connection terminal 37 comprises a terminal body 372 and a pair of knife-clamping pieces 374. The terminal body 372 is substantially plate-shaped. The pair of knife-clamping pieces 374 are disposed on one end of the terminal body 372. The pair of knife-clamping pieces 374 are disposed to directly face each other with a spacing, the spacing being smaller than a radial dimension of the connection pin of the sensing elements 40 as described infra to clamp the connection pins of the sensing elements 40. The pair of knife-clamping pieces 374 may be plate-shaped.

To facilitate an electrical connection with the circuit board 20, the insulation displacement connection terminal 37 may further comprise a plug-in end 376. The plug-in end 376 is disposed on the terminal body 372. The plug-in end 376 is protrudingly disposed at a top end of the terminal body 372. The plug-in end 376 continuously extends to be inserted into the press-fit through-hole 22b and is electrically connected with the circuit board 20. In this embodiment, the plug-in end 376 is disposed to protrude from the press-fit through-hole 22b and is connected by welding to the welding face of the circuit board 20.

To be securely mounted and inserted in the holding cavity 16 of the bracket 10, a holding convex rib 378 is protrudingly provided on the terminal body 372. The holding convex rib 378 may be barb-shaped. The number and distribution of the holding convex ribs 378 on each of the insulation displacement connection terminals 37 are only required to satisfy the corresponding holding needs. In this embodiment, two of the holding convex ribs 378 are disposed on each of the insulation displacement connection terminals 37, and the two holding convex ribs 378 are disposed on two side walls of the terminal body 372, respectively.

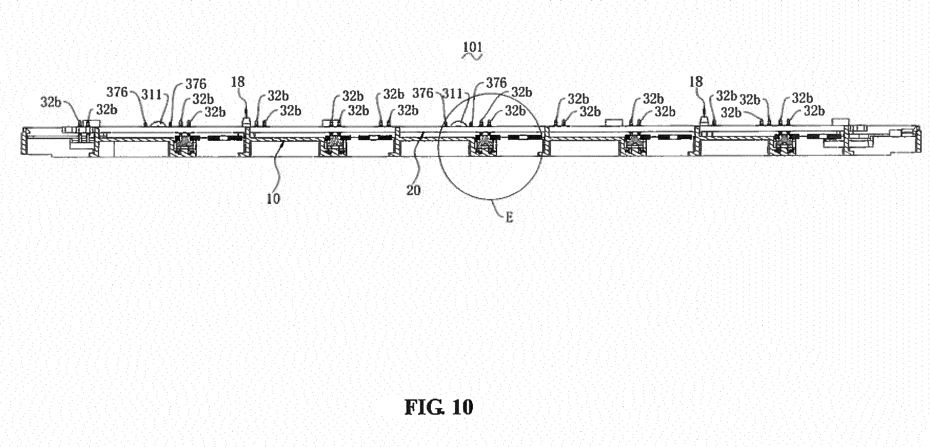

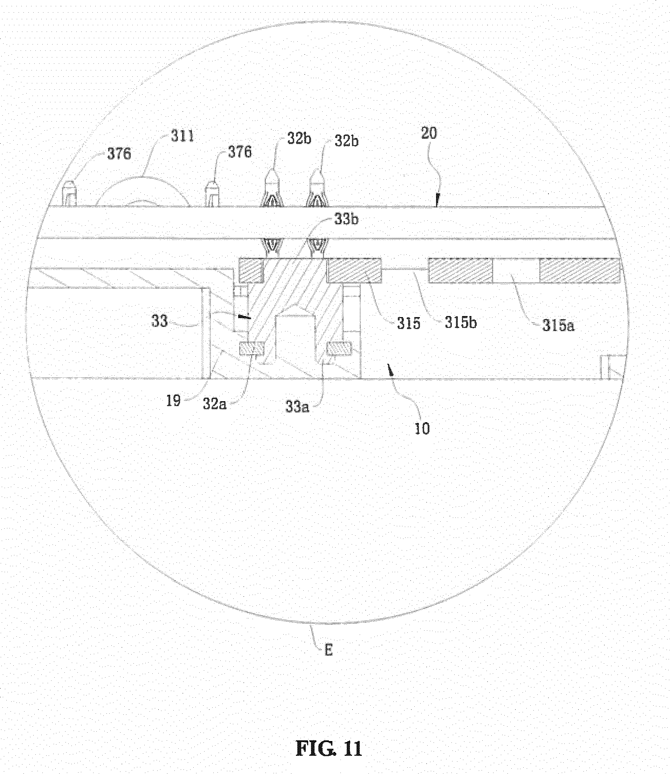

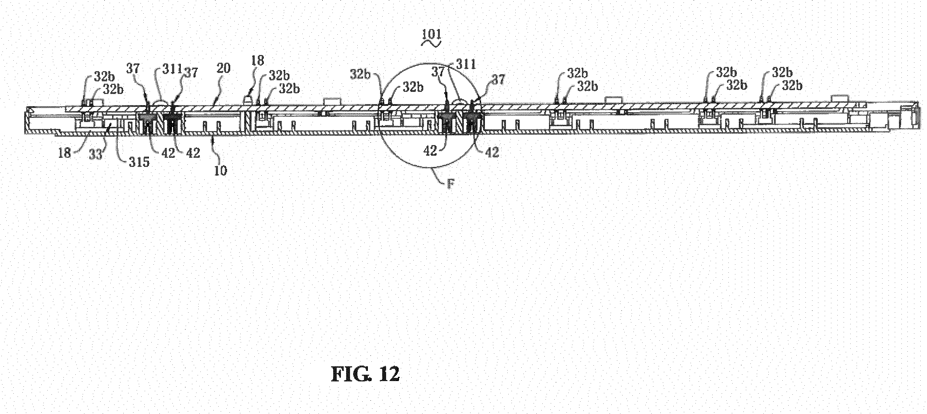

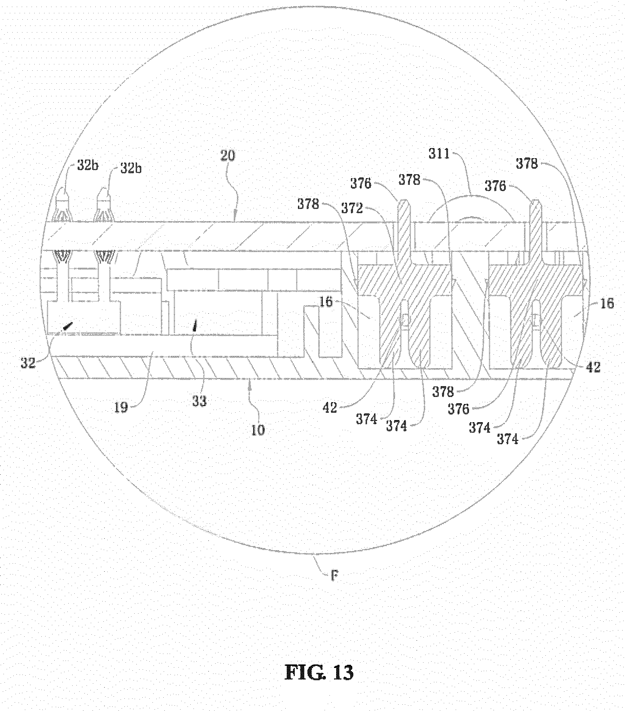

Referring to Figs. 9 to 13 together, to implement monitoring corresponding parameters of the corresponding battery cell, the connection assembly 101 further comprises a detection element 40. The detection element 40 is disposed on the connector 31 to directly detect the connector 31. The detection element 40 is electrically connected with the circuit board 20 to transmit the detected detection signal to the circuit board 20. In this embodiment, the detection element 40 is disposed in the mounting hole 318 of the connector 31. The detection element 40 has a connection pin 42. The connection pin 42 is electrically connected with the circuit board 20. To enhance secure and stable connection performance, the connection pin 42 is in insulation displacement connection with the circuit board 20. In this embodiment, the connection pin 42 is electrically connected with the insulation displacement connection terminal 37. Specifically, the connection pin 42 extends to the in-between of the pair of knife-clamping pieces 374 which are disposed to abut against the connection pin 42, respectively. Of course, the connection pin 42 may also be electrically connected with the insulation displacement connection terminal 37 via a conducting wire (not shown).

Specific specification and kinds of the detection element 40 may be selected according to detection needs. In this embodiment, the detection element 40 comprises a temperature sensor. The temperature sensor is configured for detecting a temperature of the connector 31. The temperature sensor may be any kind and specification. The temperature sensor is a thermistor. In this embodiment, the temperature sensor is a negative temperature coefficient (NTC) thermal resistance sensor.

To be capable of detecting a voltage of the connector 31, the detection element 40 further comprises a voltage detection element. The voltage detection element is configured for detecting the voltage of the connector 31. The voltage detection element may be only a resistance. Of course, as an instance, one of the two detection elements 40 shown in Fig. 2 may include a temperature detection element; the other may include a voltage detection element.

### Embodiment 2:

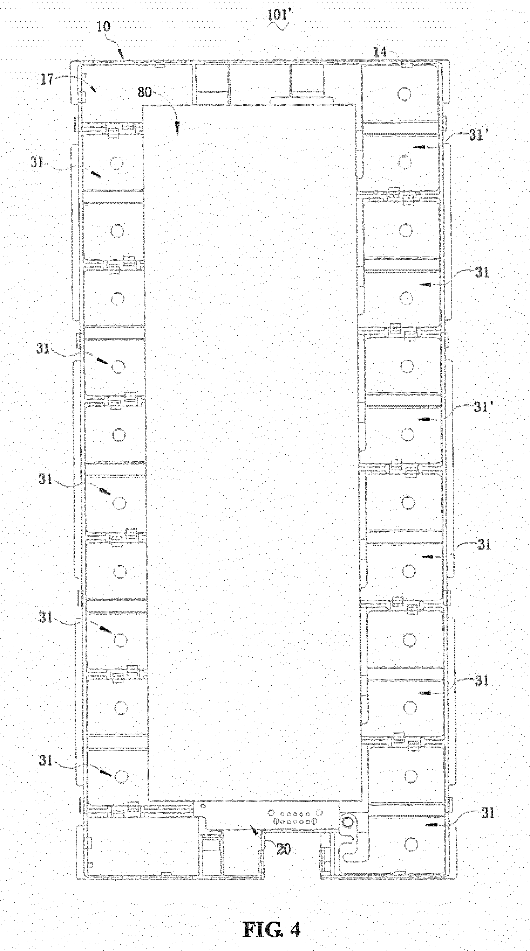

Continuously referring to Fig. 4, as a variation of embodiment 1, the present disclosure provides another kind of connection assembly 101'. Different from embodiment 1, to further enhance the performance of holding the press-fit terminal 32 to thereby enhance a secure electrical connection between the press-fit terminal 32 and the circuit board 20, the connection assembly 101' comprises a filler 80. The filler 80 extends into the press-fit through-hole 22 and contacts a press-fit end 32b of the press-fit terminal 32. The filler 80 may fix the press-fit terminal 32 onto the circuit board 20 by filling the press-fit through-hole 22, thereby capable of improving the performance of secure electrical connection between the press-fit terminal 32 and the circuit board 20. In this embodiment, to enhance sealing performance and simplify the manufacturing process, the filler 80 is a cured sealant. To further enhance heat conduction performance, the filler 80 is a cured silicone pad. In other words, by infusing a melted silicone liquid, the silicone is allowed to flow into the press-fit through-hole 22, and finally cured to form the filler 80. In this embodiment, the filler 80 simultaneously extends into the press-fit through-hole 22b. At this point, the filler 80 contacts the plug-in end 376 of the insulation displacement connection terminal 37 and secures the insulation displacement connection terminal 37 on the circuit board 20. To enhance the insulation performance, the filler 80 continuously extends to cover at least part of the circuit board 20. Specifically, after welding or contact electrical connection of all components of the connection assembly 101 is completed and the connector 31 is electrically connected with the cell, the filler 80 covers and fills the corresponding components. Specifically, the corresponding components and space are filled and covered by infusing silicone.

In this embodiment, the bracket 10 has a recess 17 enclosed by protruding sidewalls. Upon infusion of the silicone, the silicone liquid may be held inside the recess 17. The filler 80 is filled into the recess. It may be understood that the filler 80 may also use other materials such as resin and rubber instead.

### Embodiment 3:

The present disclosure provides a battery module (not shown). The battery module comprises a plurality of cells (not shown) and the connection assembly 101 as disclosed in Embodiment 1. Each of the cells is electrically connected with a corresponding one of the connectors 101. In this embodiment, the cell is electrically connected with the connector 31. The cells are disposed at a bottom portion side of the bracket. The battery module is a lithium battery. The battery module may be applied to drive an electric vehicle.

What have been described above are only preferred embodiments of the present disclosure, and are not intended to limit the protection scope of the present disclosure.

## Claims

1. A connection assembly (101), comprising:
a bracket (10);
a circuit board (20) disposed on the bracket (10) and provided with a press-fit through-hole (22);
a connector (31) disposed on the bracket (10) and configured for electrically connecting a battery cell, and
a press-fit terminal (32) having a connection end (32a) and a press-fit end (32b), wherein the connection end (32a) is electrically connected with the connector (31), and the press-fit end (32b) extends into at least part of the press-fit through-hole (22) and is electrically connected with the circuit board (20), **characterized in** further comprising a detection element (40) disposed on the connector (31) for monitoring the parameters of the battery cell; **in that** the detection element (40) is electrically connected with the circuit board (20) to transmit a detection signal, as detected to, the circuit board (20), and in further comprising an insulation displacement connection terminal (37) that is electrically connected with the detection element (40) and the circuit board (20), respectively.

2. The connection assembly (101) according to claim 1, **characterized in** further comprising a filler (80) that extends into the press-fit through-hole (22) and contacts with the press-fit end (32b), thereby securing the press-fit terminal (32) onto the circuit board (20).

3. The connection assembly (101) according to claim 2, **characterized in that** the filler (80) is a cured sealant.

4. The connection assembly (101) according to claim 1, **characterized in that** the press-fit terminal (32) is configured to be press-fitted and electrically connected with the circuit board (20).

5. The connection assembly (101) according to claim 1, **characterized in that** the press-fit terminal (32) comprises:
a connection body that is electrically connected with the connector (31); and
a press-fit end portion that is protrudingly disposed on the connection body (311); the press-fit end portion being inserted in the press-fit through-hole (22) and being electrically connected with the circuit board (20).

6. The connection assembly ( 101) according to claim 1, **characterized in that** the connector (31) comprises a connection body (311) and a connection end portion (315), and the connection end portion (315) is protrudingly disposed on the connection body (311) and electrically connected with the press-fit terminal (32).

7. The connection assembly (101) according to claim 1, **characterized in that**:
the connector (31) has a first metal material structure; and
the press-fit terminal (32) is a second metal material structure different from that of the connector (31).

8. The connection assembly (101) according to claim 1, **characterized in** comprising a mounting rack (36) disposed on the connector (31) and provided with a mounting hole (318); and **characterized in that** the detection element (40) is disposed in the mounting hole (318).

9. The connection assembly (101) according to claim 1, **characterized in that** the detection element (40) comprises a temperature sensor (41) that is configured for detecting a temperature of the connector (31).

10. The connection assembly (101) according to claim 1, **characterized in that**:
the insulation displacement connection terminal (37) comprises a terminal body (372) and a plug-in end (376);
the plug-in end (376) is protrudingly disposed on one end of the terminal body (372) and continuously extends to be plugged into the press-fit through-hole (22) so as to be electrically connected with the circuit board (20).

11. The connection assembly according to claim 10, **characterized in that** the insulation displacement connection terminal (37) is configured to be press-fitted and electrically connected with the circuit board (20).

12. The connection assembly (101) according to claim 10, **characterized in** further comprising a filler (80), and **characterized in that** the filler (80) extends into the press-fit through-hole (22) and contacts the plug-in end (376), thereby securing the insulation displacement connection terminal (37) onto the circuit board (20).

13. The connection assembly (101) according to claim 12, **characterized in that** the filler (80) is disposed to surround the plug-in terminal.

## Patentansprüche

1. Verbindungsbaugruppe (101), die umfasst:
einen Träger (10);
eine Leiterplatte (20), die an dem Träger (10) angeordnet ist und mit einem Einpress-Durchgangsloch (22) versehen ist;
einen Verbinder (31), der an dem Träger (10) angeordnet und zum elektrischen Verbinden einer Batteriezelle ausgeführt ist, sowie
einen Einpress-Anschluss (32), der ein Verbindungs-Ende (32a) und ein Einpress-Ende (32b) hat, wobei das Verbindungs-Ende (32a) elektrisch mit dem Verbinder (31) verbunden ist und das Einpress-Ende (32b) sich in wenigstens einen Teil des Einpress-Durchgangslochs (22) hinein erstreckt und elektrisch mit der Leiterplatte (20) verbunden ist, **dadurch gekennzeichnet, dass** sie des Weiteren ein Erfassungselement (40) umfasst, das an dem Verbinder (31) angeordnet ist, um die Parameter der Batteriezelle zu überwachen; dadurch, dass das Erfassungselement (40) elektrisch mit der Leiterplatte (20) verbunden ist, um ein Erfassungssignal bei Erfassung zu der Leiterplatte (20) zu übertragen, und dadurch, dass sie des Weiteren einen Verbindungsanschluss (37) zur Verdrängung von Isolierung umfasst, der elektrisch mit dem Erfassungselement (40) bzw. der Leiterplatte (20) verbunden ist.

2. Verbindungsbaugruppe (101) nach Anspruch 1, **dadurch gekennzeichnet, dass** sie des Weiteren ein Füllmittel (80) umfasst, das sich in das Einpress-Durchgangsloch (22) hinein erstreckt und mit dem Einpress-Ende (32b) in Kontakt ist und so den Einpress-Anschluss (32) an der Leiterplatte (20) fixiert.

3. Verbindungsbaugruppe (101) nach Anspruch 2, **dadurch gekennzeichnet, dass** das Füllmittel (80) ein ausgehärtetes Dichtungsmittel ist.

4. Verbindungsbaugruppe (101) nach Anspruch 1, **dadurch gekennzeichnet, dass** der Einpress-Anschluss (32) so ausgeführt ist, dass er eingepresst und elektrisch mit der Leiterplatte (20) verbunden wird.

5. Verbindungsbaugruppe (101) nach Anspruch 1, **dadurch gekennzeichnet, dass** der Einpress-Anschluss (32) umfasst:
einen Verbindungskörper, der elektrisch mit dem Verbinder (31) verbunden ist; sowie
einen Einpress-Endabschnitt, der vorstehend an dem Verbindungs-Körper (311) angeordnet ist; wobei der Einpress-Endabschnitt in das Einpress-Durchgangsloch (22) eingeführt und elektrisch mit der Leiterplatte (20) verbunden ist.

6. Verbindungsbaugruppe (101) nach Anspruch 1, **dadurch gekennzeichnet, dass** der Verbinder (31) einen Verbindungs-Körper (311) sowie einen Verbindungs-Endabschnitt (315) umfasst und der Verbindungs-Endabschnitt (315) vorstehend an dem Verbindungs-Körper (311) angeordnet und elektrisch mit dem Einpress-Anschluss (32) verbunden ist.

7. Verbindungsbaugruppe (101) nach Anspruch 1, **dadurch gekennzeichnet, dass**:
der Verbinder (31) eine erste Metallmaterial-Struktur hat; und
der Einpress-Anschluss (32) eine zweite Metallmaterial-Struktur ist, die sich von der des Verbinders (31) unterscheidet.

8. Verbindungsbaugruppe (101) nach Anspruch 1, **dadurch gekennzeichnet, dass** sie einen Montageträger (36) umfasst, der an dem Verbinder (31) angeordnet und mit einem Montageloch (318) versehen ist; und **dadurch gekennzeichnet, dass** das Erfassungselement (40) in dem Montageloch (318) angeordnet ist.

9. Verbindungsbaugruppe (101) nach Anspruch 1, **dadurch gekennzeichnet, dass** das Erfassungselement (40) einen Temperatursensor (41) umfasst, der zum Erfassen einer Temperatur des Verbinders (31) ausgeführt ist.

10. Verbindungsbaugruppe (101) nach Anspruch 1, **dadurch gekennzeichnet, dass**:
der Verbindungsanschluss (37) zur Verdrängung von Isolierung einen Anschluss-Körper (372) und ein Einsteck-Ende (376) umfasst;
das Einsteck-Ende (376) an einem Ende des Anschluss-Körpers (372) vorstehend angeordnet ist und sich durchgehend so erstreckt, dass es zum elektrischen Verbinden mit der Leiterplatte (20) in das Einpress-Durchgangsloch (22) eingesteckt wird.

11. Verbindungsbaugruppe nach Anspruch 10, **dadurch gekennzeichnet, dass** der Verbindungsanschluss (37) zur Verdrängung von Isolierung so ausgeführt ist, dass er eingepresst und elektrisch mit der Leiterplatte (20) verbunden wird.

12. Verbindungsbaugruppe (101) nach Anspruch 10, **dadurch gekennzeichnet, dass** sie des Weiteren ein Füllmittel (80) umfasst, und **dadurch gekennzeichnet, dass** sich das Füllmittel (80) in das Einpress-Durchgangsloch (22) hinein erstreckt und mit dem Einsteck-Ende (376) in Kontakt kommt und so den Verbindungsanschluss (37) zur Verdrängung von Isolierung an der Leiterplatte (20) fixiert.

13. Verbindungsbaugruppe (101) nach Anspruch 12, **dadurch gekennzeichnet, dass** das Füllmittel (80) so angeordnet ist, dass es den Einsteck-Anschluss umschließt.

## Revendications

1. Organe de connexion (101) comprenant :
un support (10),
une carte à circuit imprimé (20) disposée sur le support (10) et configurée pour relier électriquement une cellule de batterie, et
une borne à ajustement à force (32) comportant une extrémité de connexion (32a) et une extrémité à ajustement à force (32b), l'extrémité de connexion (32a) étant reliée électriquement avec le connecteur (31), et l'extrémité à ajustement à force (32b) s'étendant dans au moins une partie d'un trou traversant d'ajustement à force (22) et étant électriquement reliée avec la carte à circuit imprimé (20), **caractérisé en ce qu'**il comprend en outre un élément de détection (40) disposé sur le connecteur (31) dans le but de surveiller les paramètres de la cellule de batterie,
**en ce que** l'élément de détection (40) est relié électriquement avec la carte à circuit imprimé (20) afin de transmettre un signal de détection, tel qu'il est détecté à la carte à circuit imprimé (20), et **en ce qu'**il comprend en outre une borne de connexion auto-dénudante (37) qui est respectivement reliée électriquement avec l'élément de détection (40) et avec la carte à circuit imprimé (20).

2. Organe de connexion (101) selon la revendication 1, **caractérisé en ce qu'**il comprend en outre une charge (80) qui s'étend dans le trou traversant d'ajustement à force (22) et entre en contact avec l'extrémité à ajustement à force (32b) ce qui immobilise ainsi la borne à ajustement à force (32) sur la carte à circuit imprimé (20).

3. Organe de connexion (101) selon la revendication 2, **caractérisé en ce que** la charge (80) est un agent d'étanchéité durci.

4. Organe de connexion (101) selon la revendication 1, **caractérisé en ce que** la borne à ajustement à force (32) est configurée pour être ajustée à force et reliée électriquement avec la carte à circuit imprimé (20).

5. Organe de connexion (101) selon la revendication 1, **caractérisé en ce que** la borne à ajustement à force (32) comprend :
un corps de connexion qui est relié électriquement avec le connecteur (31), et
une partie terminale à ajustement à force qui est disposée en faisant saillie sur le corps de connexion (311), la partie terminale à ajustement à force étant insérée dans le trou traversant à ajustement à force (22) et étant reliée électriquement avec la carte à circuit imprimé (20).

6. Organe de connexion (101) selon la revendication 1, **caractérisé en ce que** le connecteur (31) comprend un corps de connexion (311) et une partie terminale de connexion (315), et la partie terminale de connexion (315) est disposée en faisant saillie sur le corps de connexion (311) et est reliée électriquement à la borne à ajustement à force (32).

7. Organe de connexion (101) selon la revendication 1, **caractérisé en ce que** :
le connecteur (31) présente une première structure en matériau métallique, et
la borne à ajustement à force (32) est une seconde structure à matériau métallique différent de celui du connecteur (31).

8. Organe de connexion (101) selon la revendication 1, **caractérisé en ce qu'**il comprend un bâti de montage (36) disposé sur le connecteur (31) et muni d'un trou de montage (318), et **caractérisé en ce que** l'élément de détection (40) est disposé dans le trou de montage (318).

9. Organe de connexion (101) selon la revendication 1, **caractérisé en ce que** l'élément de détection (40) comprend un capteur de température (41) qui est configuré pour détecter la température du connecteur (31).

10. Organe de connexion (101) selon la revendication 1, **caractérisé en ce que** :
la borne de connexion auto-dénudante (37) comprend un corps de borne (372) et une extrémité d'insertion (376),
l'extrémité d'insertion (376) est disposée en faisant saillie sur une première extrémité du corps de borne (372) et s'étend de manière continue pour être insérée dans le trou traversant à ajustement à force (22) de sorte à être reliée électriquement avec la carte à circuit imprimé (20).

11. Organe de connexion (101) selon la revendication 10, **caractérisé en ce que** la borne de connexion auto-dénudante (37) est configurée pour être ajustée à force et reliée électriquement avec la carte à circuit imprimé (20) .

12. Organe de connexion (101) selon la revendication 10, **caractérisé en ce qu'**il comprend en outre une charge (80), et **caractérisé en ce que** la charge (80) s'étend dans le trou traversant à ajustement à force (22) et entre en contact avec l'extrémité d'insertion (376), ce qui immobilise ainsi la borne de connexion auto-dénudante (37) sur la carte à circuit imprimé (20).

13. Organe de connexion (101) selon la revendication 12, **caractérisé en ce que** la charge (80) est disposée pour enserrer la borne d'insertion.
